# EUROPEAN PATENT SPECIFICATION

(11) **EP 3 936 429 B1**
(45) Date of publication and mention of the grant of the patent: **29.11.2023**
(21) Application number: 20382618.5
(22) Date of filing: 09.07.2020
(51) Int. Cl.: B64C 13/00, B64C 13/50

(54) **CONTROL SYSTEM AND METHOD FOR AN ACTUATOR FOR A FLIGHT CONTROL SURFACE OF AN AIRCRAFT**
STEUERSYSTEM UND VERFAHREN FÜR EINEN AKTUATOR FÜR EINE FLUGSTEUERFLÄCHE EINES FLUGZEUGS
SYSTÈME ET PROCÉDÉ DE COMMANDE POUR UN ACTIONNEUR D'UNE SURFACE DE COMMANDE DE VOL D'UN AÉRONEF

(43) Date of publication of application: 12.01.2022
(73) Proprietor: Airbus Defence and Space SAU, 28906 Getafe (ES)
(72) Inventor: JIMÉNEZ OLAZÁBAL, Andrés, 28906 Getafe (ES)
(74) Representative: Elzaburu S.L.P.

(56) References cited:
- US-A- 5 129 310
- US-A1- 2013 026 298
- US-A1- 2018 362 149
- US-A1- 2019 127 049

## Description

### Field of the invention

The present invention relates to a flight control electronics based on simple electronic hardware. The intended system is able to control a primary and/or a secondary flight actuator based on simple electronic hardware.

### Background of the invention

Generally, flight control surfaces are operated by two or three actuators disposed on either side of the flight control surface. The actuators are driven by a controller and commanded by the controller to substantially the same position to adjust the positioning of the flight control surface.

The methods commonly used for an electronic control of the flight actuators are based on complex electronic hardware (CEH) involving software placed in a microprocessor or firmware placed on a programmable logic, for instance, a field-programmable gate array (FPGA).

These architectures allow the flexibility to change parameters and optimize the control algorithm. They require activities for certification under standards for software development in the aircraft safety sector, like RTCA-DO178 or RTCA-DO254. Said certification step requires a huge effort for data access layer (DAL) applications. Furthermore, any change performed after certification could require in most cases to perform the complete certification process again.

As previously stated, classical configurations for a flight control surface is composed by two or three actuators placed physically in parallel. In this way, in case of failure of one actuator, there is still one actuator live to operate the flight control surface.

In configurations where both actuators work in an active-active mode in order to reduce the forces and fatigue of both, the flight control surface and the actuators, the aircraft computer that controls the actuators shall share data in order to balance the force performed by each actuator.

This load sharing control comprises two different periods. A first period is related to the balance in the stabilized movement of the load and the second period depends of transient movements, i.e. start-up or breaking movements.

Usually a microprocessor located in the actuator performs the above balance. The first period could be compensated by complex electronic hardware (CEH) but the second period is limited by the operating cycle of microprocessor (below hundred Hertz range). Therefore, the transient loads in the load sharing (KHz range) could not be compensated and depends on the stiffness mechanical links of the structure.

It is known document US2013026298A1 disclosing a digital actuation system including a plurality of actuators; a plurality of position sensors coupled to the actuators, the plurality of position sensors providing rate feedback signals proportional to an actuator rate; a plurality of force sensors coupled to the actuators, the plurality of force sensors providing delta pressure signals; and a feedback control loop configured to receive the rate feedback signals and delta pressure signals and compute a difference in actual actuator rates and sum the difference with a computed difference in actuator forces to generate actuator positioning commands that equalize the actuator forces on a control surface.

### Summary of the invention

The objective of this invention is a flight actuator control system and method based on simple electronic hardware with a load-sharing system and method. This design is able to control the positions of an actuator by a control loop and even to compensate the two periods of load sharing of at least two actuators placed in the same primary or secondary flight control surface.

The invention is based on an actuator controller based on simple electronic hardware with load-sharing. This design is able to control the actuator based on two control features, one used for positioning the actuator and the second one for load-sharing between actuators placed in the same flight control surface.

The controlling means are analog controlling means such that microprocessors are avoided.

As previously stated, the aircraft comprises at least a first actuator and a second actuator in connection with a flight control surface for its movement. The aircraft further comprises a primary flight control computer and a secondary flight control computer. The primary flight control computer is configured to provide the control system with a digital signal of a set position of the first actuator. The secondary flight control computer is configured to provide the control system with a digital signal of a set position of the second actuator.

In this application, set position means a target position of the actuator, i.e., the position that the actuator has to reach.

The first actuator comprises at least a position analog sensor and a load analog sensor. The position analog sensor is configured to provide an analog signal of the position of the first actuator. The load analog sensor is configured to provide an analog signal of the load of the first actuator.

The second actuator comprises at least a position analog sensor and a load analog sensor. The position analog sensor is configured to provide an analog signal of the position of the second actuator. The load analog sensor is configured to provide an analog signal of the pressure of the second actuator.

More specifically, in an embodiment, the load analog sensors are pressure sensors.

The control system comprises:
- a first control unit configured to be connected to the first actuator for its activation and movement and configured to receive from the primary flight control computer the set position of the first actuator,
- a second control unit connected to the second actuator for its activation and movement and configured to receive from the secondary flight control computer the set position of the second actuator.

The first control unit comprises:
- a first digital to analog converter configured to convert the digital signal of the set position received from the primary flight control computer into an analog signal.
- a first analog controlling element adapted to receive:
   o the output analog signal of the set position of the first actuator from the digital to analog converter,
   o the measured analog signal of the position sensor with the position of the first actuator, and
   o the measured analog signals of the load sensors with the load of the first and of the second actuator. In this way, the load sensor of every actuator is connected to the other control unit in order to send and receive the load of every actuator.

It has to be noted that this information is shared in an analog mode.

With the above data, the first analog controlling element is configured to:
▪ calculate the deviation between the analog signal of the set position of the first actuator and the measured analog signal of the position sensor,
▪ calculate the load sharing between the first and the second actuators and the deviation of the first actuator with respect to a load sharing target, and
▪ to provide the first actuator with a signal of its deviation from the set position of the first actuator corrected by its deviation with respect to the load sharing target.

Thus, the first control unit is able to provide the first actuator with a signal comprising a corrected deviation or corrected error of the actuator position with respect to the set position provided by the flight control computer. The deviation or error with respect to set position is corrected by the deviation of the actuator with respect to a load sharing target. The load sharing target is a parameter that establishes how the load should be shared among the actuators. In an embodiment, the load is balanced between each actuator, such that each actuator carries 50% of the load. The control unit comprises the value of the load sharing target that is a fixed value although it can be changed.

As a result, the deviation or error of the actuator position with respect to the set position is corrected, usually slightly corrected, in order to fulfil the load sharing requirements.

Equally, the second control unit comprises:
- a second digital to analog converter configured to convert the digital signal of the set position of the second actuator received from the secondary control computer into an analog signal,
- a second analog controlling element adapted to receive:
   o the output analog signal of the set position of the second actuator from the digital to analog converter,
   o the measured analog signal of the position sensor of the second actuator, and
   o the measured analog signal of the load sensors of the first and of the second actuator,
- the second analog controlling element being configured to:
   ▪ calculate the deviation between the analog signal of the set position of the second actuator and the measured analog signal of the position sensor,
   ▪ calculate the load sharing between the first and the second actuators and the deviation of the second actuator with respect to the load sharing target, and
   ▪ to provide the second actuator with a signal of its deviation from the set position of the second actuator corrected by its deviation with respect to the load sharing target.

Thus, each control unit is connected to an actuator. The control unit is able to activate the actuator hydraulically and electrically. Once the actuator is activated and ready to be controlled, the command that come from the flight control computer (FCC) is converted into an analog signal.

This command signal is used in the position control loop of the analog controller to calculate the current position error by using the current real position of the actuator. A deviation or error from the set position is then used in the controller defined for the application. In an embodiment, a command is provided to the controller, which is the error or deviation in the position multiplied by a constant.

As previously stated, the control system also calculates and adjusts or corrects the load sharing or distribution of the load between the first and the second actuators according to the load sharing target.

The main advantage of this system is that the controller is implemented in simple electronic hardware (SEH). Thus, there is no limitation in terms of operating cycle and the control loop and load-sharing control between actuators only depends on the bandwidth of the analog components used that are several orders of magnitude higher than the KHz range requested.

Furthermore, there are no activities related to certification. Any change required after certification do not require a certification process based on RTCA-DO178 or RTCA-DO254. Another advantage of this system is the reduction in lead times for developing the controller and also the reduction in cost as no activities are requested for certification.

The control unit is configured to communicate with the primary flight control computer and the secondary flight control computer through digital communication, A429-R1/R2, of the aircraft.

The aircraft control computer is provided with data related to the height of the aircraft, speed, pilot inputs, load sharing target between actuators and it provides an output with the position of the actuator according to said data. The aircraft computer comprises a control and a monitor.

The communication between the aircraft computer and the control unit is a digital communication. But, according to the invention, the control of the actuator is performed in an analog mode.

It allows to have a simple electronic system located in the actuator, while the computing means are located in the aircraft, specifically in the aircraft flight control computer.

In an embodiment, the analog controlling element may comprise a controller of the type of a proportional controller, P controller. The controller adjusts the actuator position subtracting the measured signal from the set position, thus obtaining an error signal or deviation, which determines at any time the difference between the desired value, set position, and the measured value. The controlling element also takes into account the value of the load sharing.

It is also an object of the present invention an aircraft and a control method according to the above described.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a block diagram of an embodiment of a control unit, an actuator, a group of sensors and a flight control computer.
Figure 2 shows a block diagram of an embodiment of two control units, two actuators, two flight control computers and a flight control surface.

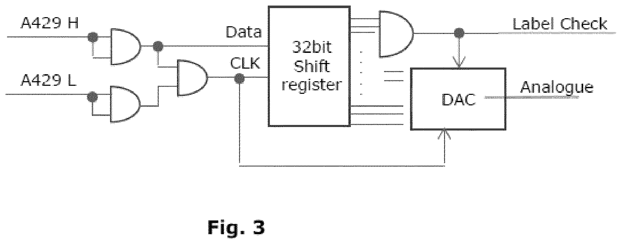

Figure 3 shows an embodiment of the circuit between the connection of the flight control computers and the digital to analog converter.
Figure 4 shows a graph showing an embodiment of the evolution over time of the force in a transient period and in a stabilized period.
Figure 5 shows a plan view of an aircraft and its flight control surfaces.

### Detailed description of the invention

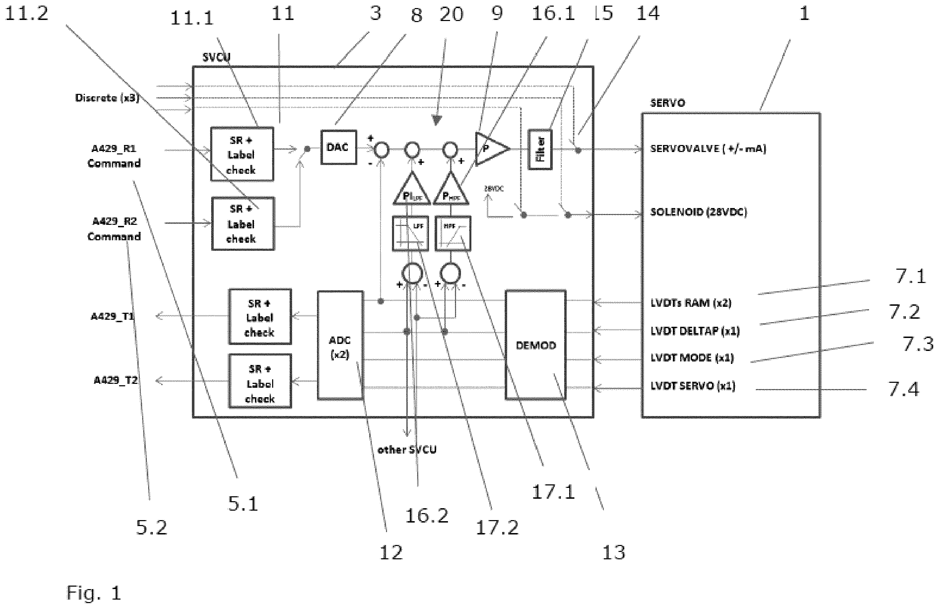

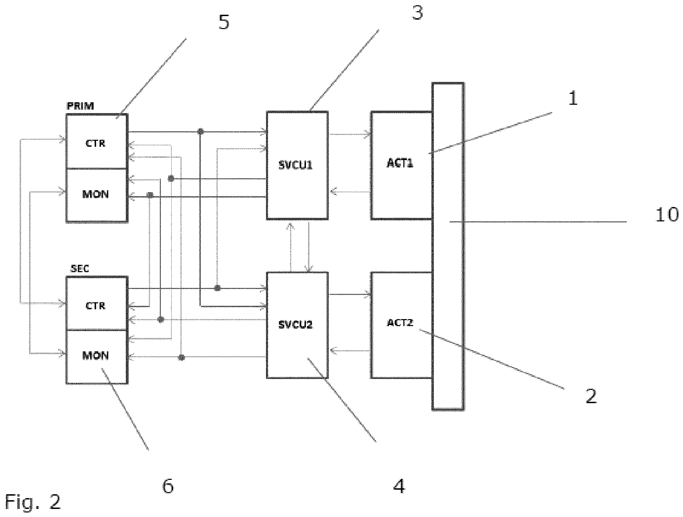

Figures 1 and 2 discloses an embodiment of the control system for an actuator for a flight control surface of an aircraft.

The aircraft comprises a first actuator (1) and a second actuator (2) in connection with a flight control surface (10) for its movement. The aircraft further comprises a primary flight control computer (5) and a secondary flight control computer (6). The primary flight control computer (5) is configured to provide the control system with a set position digital signal of the first actuator (1). The secondary flight control computer (6) is configured to provide the control system with a set position digital signal of the second actuator (2).
- The first actuator (1) comprises an analog position sensor (7.1) configured to provide an analog signal of the position of the first actuator (1). It also comprises an analog load sensor (7.2) configured to provide an analog signal of the load of the first actuator (1).
- The second actuator (2) comprises a first and a second analog sensor (7.1, 7.2) as the previously described. The analog position sensor (7.1) is configured to provide an analog signal of the position of the second actuator (2). The analog load sensor (7.2) is configured to provide an analog signal of the load of the second actuator (2).

In the shown embodiment, the following analog sensors exists:
- RAM, position sensor (7.1) which provides the measured position of the actuator (1, 2). The shown embodiment comprises two position sensors (7.1) for redundancy.
- DELTAP, load sensor (7.2) which provides the pressure of the actuator (1, 2) for measuring the load.
- MODE (7.3) which provides if the actuator (1, 2) is active or passive.
- SERVO (7.4) which provides the state of the servo valve of the actuator (1, 2).

More specifically, the actuators (1, 2) comprise servovalves that comprise a servovalve and a solenoid.

The shown control system comprises:
- The first control unit (3) connected to the first actuator (1) for its activation and movement and configured to receive from the primary flight control computer (5) the set position of the first actuator (1).
- The second control unit (4) connected to the second actuator (2) for its activation and movement and configured to receive from the secondary flight control computer (6) the set position of the second actuator (2).

The shown first control unit (3) comprises:
- a first digital to analog converter (8) configured to communicate with the primary flight control computer (5) such that the set position digital signal of the first actuator (1) is converted into an analog signal. Optionally, several digital to analog converters (8) DAC may be implemented, such that an average value is g et.
- a first analog controlling element (20) adapted to receive:
   o the output analog signal of the set position of the first actuator (1) from the digital to analog converter (8),
   o the measured analog signal of the position sensor (7.1) of the first actuator (1), and
   o the measured analog signals of the load sensors (7.1, 7.2) of the first and of the second actuators (1, 2).

The first analog controlling element (20) is configured to:
▪ calculate the deviation between the analog signal of the set position of the first actuator (1) and the measured analog signal of the position sensor (7.1),
▪ calculate the load sharing between the first and the second actuators (1, 2) and the deviation of the first actuator (1) with respect to a load sharing target, and
▪ to provide the first actuator (1) with a signal of its deviation from the set position of the first actuator (1) corrected by its deviation with the load sharing target.

Similarly, in an embodiment a second control unit (4) would comprise:
- a second digital to analog converter (8) configured to convert the digital signal of the set position of the second actuator (2) received from the secondary control computer (6) into an analog signal
- a second analog controlling element (20) adapted to receive:
   o the output analog signal of the set position of the second actuator (2) from the digital to analog converter (8),
   o the measured analog signal of the position sensor (7.1) of the second actuator (2), and
   o the measured analog signal of the load sensors (7.2) of the first and of the second actuator (1, 2),
- the second analog controlling element (20) being configured to:
   ▪ calculate the deviation between the analog signal of the set position of the second actuator (2) and the measured analog signal of the position sensor (7.1),
   ▪ calculate the load sharing between the first and the second actuators (1, 2) and the deviation of the second actuator (2) with respect to the load sharing target, and
   ▪ to provide the second actuator (2) with a signal of its deviation from the set position of the second actuator (2) corrected by its deviation with the load sharing target.

In the shown embodiment, the first control unit (3) is additionally configured to receive the set position of the second actuator (2) and the second control unit (4) is configured to receive the set position of the first actuator (1) for redundancy purposes.

In the embodiment, the analog controlling elements (20) comprise a first and a second load controlling element (16.1, 17.1, 16.2, 17.2). In the shown embodiment, the load controlling elements comprise a pass filter (17.1, 17.2) and a controller (16.1, 16.2).

The first load controlling element (16.1, 17.2) is adapted to calculate the load sharing between the first and the second actuators (1, 2) and the deviation of the actuator (1, 2) with respect to the load sharing target in a transient period of the load. The second load controlling element (16.2, 17.2) is adapted to calculate the load sharing between the first and the second actuators (1, 2) and the deviation of the actuator (1, 2) with respect to the load sharing target in a stabilized period of the load.

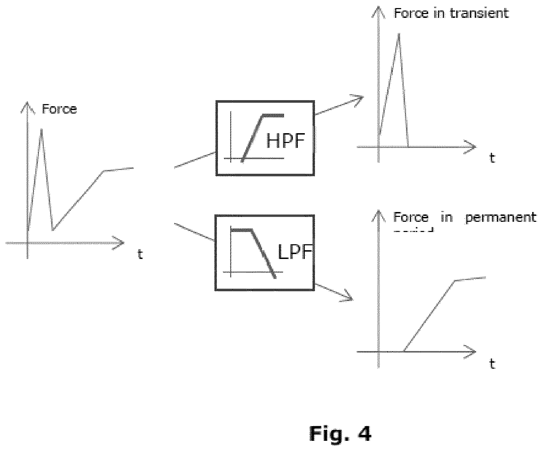

Figure 4 shows the evolution over time of the force in a transient period and in a stabilized period. The invention is also able to control the load in both periods of the load.

Specifically, the analog controlling elements (20) are configured to calculate the load sharing between the first and the second actuators (1, 2) by subtracting the measured analog signal of the load sensor (7.2) of the other actuator (2) from the measured analog signal of the load sensor (7.2) of its actuator (1).

The analog controlling elements (20) of the first control unit (3) are configured to calculate the load sharing between the first and the second actuators (1, 2) by subtracting the measured analog signal of the load sensor (7.2) of the second actuator (2) from the measured analog signal of the load sensor (7.2) of the first actuator (1). The analog controlling elements (20) of the second control unit (4) are configured to calculate the load sharing between the first and the second actuators (1, 2) by subtracting the measured analog signal of the load sensor (7.2) of the first actuator (1) from the measured analog signal of the load sensor (7.2) of the second actuator (2).

More specifically, the analog controlling element (20) disclosed in figure 1 comprises an analog controller (9) and an analog load controlling element (16.1, 16.2, 17.1, 17.2).

The analog controller (9), that may be a P controller (9), is adapted to receive:
o the output analog signal of the set position of the actuator (1, 2) from the digital to analog converter (8),
o the measured analog signal of the position sensor (7.1), and
o the deviation of the actuator (1, 2) with respect to the load sharing target from the analog load controlling element (16.1, 16.2, 17.1, 17.2).

Thus, the analog controller (9) is configured to:
▪ calculate the deviation between the analog signal of the set position of the actuator (1, 2) and the measured analog signal of the position sensor (7.1, 7.2),
▪ correct said deviation with the deviation of the actuator (1, 2) with respect to the load sharing target, and
▪ provide the actuator (1, 2) with a signal of the deviation from the set position of the actuator (1, 2) corrected by the deviation with the load sharing target.

In turn, the analog load controlling element (16.1, 16.2, 17.1, 17.2) of figure 1 is:
- adapted to receive the measured analog signals of the load sensors (7.2) of the first and of the second actuator (1, 2),
- configured to calculate the load sharing between the first and the second actuators (1, 2) and the deviation of the actuator (1, 2) with respect to the load sharing target, and
- configured to send said deviation of the actuator (1, 2) with respect to the load sharing target to the analog controller (9).

As previously stated, the analog load controlling elements (16.1, 16.2, 17.1, 17.2) comprise a first and a second load controller (16.1, 16.2). The first load controller (16.1) is adapted to control the load in the transient period of the load and the second load controller (16.2) is adapted to control the load in the stabilised period of the load.

More specifically, the analog load controlling elements (16.1, 16.2, 17.1, 17.2) comprise a low pass filter (17.1) adapted to feed the first load controller (16.1) and a high pass filter (17.2) adapted to feed the second load controller (16.2). The first and second pass filters (17.1, 17.2) are adapted to receive the measured analog signals of the load sensors (7.2) of the first and of the second actuator (1, 2).

Therefore, the measured signals are instrumented and adapted for computing the first period of load-sharing, i.e., differential value in the stabilized movement, and also for the second period of load-sharing, i.e., transient movements.

As the response of both periods is different, different controllers are disclosed. In one hand, stabilized movement period means the differential load value between actuators in low frequency range and typically this difference is used to help the actuators (1, 2) to work in same load conditions, ideally 50%-50% load sharing. In the other hand, the second period based on transients means high peaks of load in actuators (1, 2) in high frequency range.

This equalization is a key parameter in terms of fatigue of actuators (1, 2). Therefore, the control of both periods is different. Stabilized movement requests a low proportional gain controller even with an integral component in order to equalize the load sharing in time while the transient period requests a high proportional gain controller for a short period of time.

For that reason, the controllers (16.1, 16.2) are designed with different control goals, in order to allow an independent correction of both terms.

In figure 1, the following controllers (16.1, 16.2) and filters (17.1, 17.2) are included:
LPF: Low Pass Filter, to keep the stabilized part in permanent regime, the cut-off frequency can be low, in the order of seconds.

HPF: High Pass Filter, to keep the fast transients, the frequency can be high, in the order of KHz.

PI_LPF: Proportional-integral gain controller for LPF. The goal is to look for zero error in steady state.

P_HPF: Proportional gain controller for the HPF. The goal is to quickly compensate the effects.

As previously stated, the load-sharing control is directly implemented in analog control by the control units (3, 4) in order to maximize the band width of this control and report to the primary flight control computer (5) and secondary flight control computer (6) for its validation.

As shown in the embodiment of figure 1, the control units (3, 4) comprise a shift register (11) configured to communicate with the flight control computers (5, 6) for receiving the set position of the actuators (1, 2) and to the analog converter (8, 9) for sending the output signal of the shift register (11).

The provided signal also comprises data for its checking, specifically a message identifier. For that reason, the control unit (3, 4) comprises a label check. The validation of commands is performed internally in the control unit (3, 4) to activate the control of the actuator (1, 2).

The shift register (11) is a cascade of flip flops, sharing the same clock, in which the output of each flip-flop is connected to the "data" input of the next flip-flop in the chain, resulting in a circuit that shifts by one position the "bit array" stored in it, "shifting in" the data present at its input and 'shifting out' the last bit in the array, at each transition of the clock input.

It is used to save each bit of the digital transmission in one place so that you can have the information saved for a cycle until the next data comes. Thus, we have the label, message identifier, separated from the data.

Finally, both commands are then consolidated and validated by checking that the difference of the signals provided by both commands is under a set value.

In the shown embodiments, the control units (3, 4) comprise a first shift register (11.1) and a second shift register (11.2). The first shift register (11.1) is configured to communicate with a primary control computer (5.1) and the second shift resistor configured to communicate with a secondary control computer (5.2). Thus, the control units (3, 4) comprise two input shift resisters (11.1, 11.2) for redundancy and single fault.

For safety reasons, the flight control computer (5, 6) has a duplex digital communication so that a first (5.1, 6.1) and a second (5.2, 6.2) control computer exist. It also allows to consolidate and validate the internal data sent from the control unit (3, 4).

The flight control computers (5, 6) comprise two wires wherein the same data circulates through said wires, but the information is inverted. In this way, if one of the wires fails the other wire is still alive. This is a redundant system which improves the safety of the system.

Figure 2 discloses that the primary and secondary aircraft flight control computers (5, 6) may command both control units (3, 4) even if the other one is malfunctioning.

The control unit (3, 4) finally comprises a filter (15) for filtering the Eigen-modal band-rejection.

The control unit (3, 4) comprises an analog to digital converter (12) configured to receive the measured signal of the analog sensors (7.1, 7.2) and with the flight computers (5, 6). More specifically, the shown embodiment comprises two analog to digital converters (12) for redundancy. Data are sent by two buses to avoid that the simple failure of a component causes a communication failure.

In the shown embodiment, the control unit (3, 4) comprises a demodulation unit (13) located between the analog sensors (7.1, 7.2) and the analog to digital converter (12).

The control unit (3, 4) comprises a switch (14) in connection with the actuator (1, 2) and commanded by discrete signals coming from the flight control computer (5, 6). In case of failure or malfunction, three discrete signals are provided in order to remove the control and the activation of the actuator (1, 2). In this way, a failed actuator (1, 2) or control unit (3, 4) could be commanded to damping mode directly by flight control computer (5, 6). If the aircraft flight control computer (5, 6) detects any malfunction in the system, it operates the switch (14) inactivating the servo valve and the solenoid.

The monitoring could be performed by the primary flight control computer (5) and the secondary flight control computer (6) in parallel to validate commands from the control unit (3, 4) during operation.

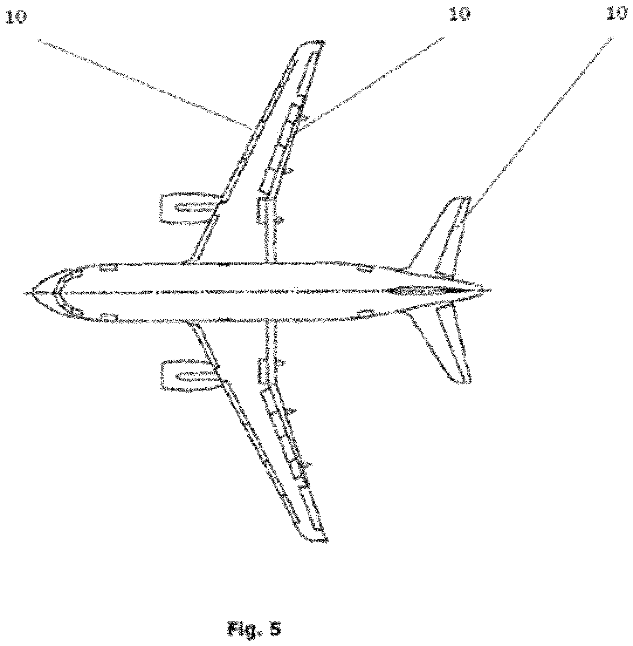

Figure 5 discloses an aircraft comprising:
- a flight control surface (10),
- a first actuator (1) and a second actuator (2) in connection with the flight control surface (10) for its movement,
- the first actuator (1) comprising a position analog sensor (7.1) and a load analog sensor (7.2), the position analog sensor (7.1) configured to provide an analog signal of the position of the first actuator (1) and the load analog sensor (7.2) configured to provide an analog signal of the load of the first actuator (1),
- the second actuator (2) comprising a position analog sensor (7.1) and a load analog sensor (7.2), the position analog sensor (7.1) configured to provide an analog signal of the position of the second actuator (2) and the load analog sensor (7.2) configured to provide an analog signal of the load of the second actuator (2), and
- a primary flight control computer (5) and a secondary flight control computer (6), the primary flight control computer (5) configured to provide a digital signal of a set position of the first actuator (1) and the secondary flight control computer (6) configured to provide a digital signal of a set position of the second actuator (2),
- the aircraft comprising a control system according to any preceding claim.

Finally, it is also an object of the present invention control method for an actuator for a flight control surface of an aircraft comprising the following steps:
- providing a first control unit (3) connected to the first actuator (1) for its activation and movement,
- the first control unit (3) receiving from the primary flight control computer (5) the set position of the first actuator (1),
- providing a second control unit (4) connected to the second actuator (2) for its activation and movement,
- the second control unit (4) receiving from the secondary flight control computer (6) the set position of the second actuator (2),
- converting the digital signal of the set position of the first actuator (1) into an analog signal by a first digital to analog converter (8) located in the first control unit (3),
- converting the digital signal of the set position of the second actuator (2) into an analog signal by a second digital to analog converter (8) located in the second control unit (4),
- providing to a first analog controlling element (20) located in the first control unit (3):
   o the output analog signal of the set position of the first actuator (1) from the digital to analog converter (8),
   o the measured analog signal of the position sensor (7.1) of the first actuator (1), and
   o the measured analog signals of the load sensors (7.2) of the first and of the second actuator (1, 2),
- providing to a second analog controlling element (20) located in the second control unit (4):
   o the output analog signal of the set position of the second actuator (2) from the digital to analog converter (8),
   o the measured analog signal of the position sensor (7.1) of the second actuator (2), and
   o the measured analog signal of the load sensors (7.2) of the first and of the second actuator (1, 2),
- calculating, in the first analog controlling element (20) of the first control unit (3), the deviation between the analog signal of the set position of the first actuator (1) and the measured analog signal of the position sensor (7.1),
- calculating, in the first analog controlling element (20) of the first control unit (3), the load sharing between the first and the second actuators (1, 2) and the deviation of the first actuator (1) with respect to a load sharing target,
- providing, in the first analog controlling element (20) of the first control unit (3), the first actuator (1) with a signal of its deviation from the set position of the first actuator (1) corrected by its deviation with the load sharing target,
- calculating, in the second analog controlling element (20) of the second control unit (4), the deviation between the analog signal of the set position of the second actuator (2) and the measured analog signal of the position sensor (7.1),
- calculating, in the second analog controlling element (20) of the second control unit (4), the load sharing between the first and the second actuators (1, 2) and the deviation of the second actuator (2) with respect to a load sharing target,
- providing, in the second analog controlling element (20) of the second control unit (4), the second actuator (2) with a signal of its deviation from the set position of the second actuator (2) corrected by its deviation with the load sharing target.

## Claims

1. System of an actuator of a flight control surface of an aircraft, comprising a first actuator (1) and a second actuator (2) and a control system for the actuator of the flight control surface of the aircraft, the first actuator (1) and the second actuator (2) connectable with the flight control surface (10) for its movement, the aircraft further comprising a primary flight control computer (5) and a secondary flight control computer (6), the control system configured to receive from the primary flight control computer (5) a digital signal of a set position of the first actuator (1) and from the secondary flight control computer (6) a digital signal of a set position of the second actuator (2), and
- the first actuator (1) comprising a position analog sensor (7.1) configured to provide an analog signal of the position of the first actuator (1) and a load analog sensor (7.2) configured to provide an analog signal of the load of the first actuator (1),
- the second actuator (2) comprising a position analog sensor (7.1) configured to provide an analog signal of the position of the second actuator (2) and a load analog sensor (7.2) configured to provide an analog signal of the load of the second actuator (2),
the control system **characterised in that** it comprises:
- a first control unit (3) connected to the first actuator (1) for its activation and movement and configured to receive the set position of the first actuator (1) from the primary flight control computer (5),
- a second control unit (4) connected to the second actuator (2) for its activation and movement and configured to receive the set position of the second actuator (2) from the secondary flight control computer (6),
- the first control unit (3) comprising:
- a first digital to analog converter (8) configured to convert the digital signal of the set position of the first actuator (1) received from the primary flight control computer (5) into an analog signal,
- a first analog controlling element (20) adapted to receive:
o the output analog signal of the set position of the first actuator (1) from the first digital to analog converter (8),
o the measured analog signal of the position sensor (7.1) of the first actuator (1), and
o the measured analog signals of the load sensors (7.2) of the first and of the second actuator (1, 2),
the first analog controlling element (20) being configured to:
▪ calculate the deviation between the analog signal of the set position of the first actuator (1) and the measured analog signal of the position sensor (7.1),
▪ calculate a load sharing between the first and the second actuators (1, 2) and the deviation of the first actuator (1) with respect to a load sharing target, and
▪ to provide the first actuator (1) with a signal of its deviation from the set position of the first actuator (1) corrected by its deviation with respect to the load sharing target,
- the second control unit (4) comprising:
- a second digital to analog converter (8) configured to convert the digital signal of the set position of the second actuator (2) received from the secondary control computer (6) into an analog signal,
- a second analog controlling element (20) adapted to receive:
o the output analog signal of the set position of the second actuator (2) from the second digital to analog converter (8),
o the measured analog signal of the position sensor (7.1) of the second actuator (2), and
o the measured analog signal of the load sensors (7.2) of the first and of the second actuator (1, 2),
- the second analog controlling element (20) being configured to:
▪ calculate the deviation between the analog signal of the set position of the second actuator (2) and the measured analog signal of the position sensor (7.1),
▪ calculate the load sharing between the first and the second actuators (1, 2) and the deviation of the second actuator (2) with respect to the load sharing target, and
▪ to provide the second actuator (2) with a signal of its deviation from the set position of the second actuator (2) corrected by its deviation with respect to the load sharing target.

2. System of an actuator of a flight control surface of an aircraft, according to claim 1, wherein the analog controlling elements (20) comprise a first and a second load controlling element (16.1, 17.1, 16.2, 17.2), the first load controlling element (16.1, 17.2) adapted to calculate the load sharing between the first and the second actuators (1, 2) and the deviation of the actuator (1, 2) with respect to the load sharing target in a transient period of the load and the second load controlling element (16.2, 17.2) is adapted to calculate the load sharing between the first and the second actuators (1, 2) and the deviation of the actuator (1, 2) with respect to the load sharing target in a stabilised period of the load.

3. System of an actuator of a flight control surface of an aircraft, according to any preceding claim, wherein the analog controlling elements (20) are configured to calculate the load sharing between the first and the second actuators (1, 2) by subtracting the measured analog signal of the load sensor (7.2) of the other actuator (2) from the measured analog signal of the load sensor (7.2) of its actuator (1).

4. System of an actuator of a flight control surface of an aircraft, according to any preceding claim, wherein the analog controlling element (20) comprises an analog controller (9) and an analog load controlling element (16.1, 16.2, 17.1, 17.2), the analog load controlling element (16.1, 16.2, 17.1, 17.2) is:
- adapted to receive the measured analog signals of the load sensors (7.2) of the first and of the second actuator (1, 2),
- configured to calculate the load sharing between the first and the second actuators (1, 2) and the deviation of the actuator (1, 2) with respect to the load sharing target, and
- configured to send the deviation of the actuator (1, 2) with respect to the load sharing target to the analog controller (9), and
the analog controller (9) adapted to receive:
o the output analog signal of the set position of the actuator (1, 2) from the digital to analog converter (8),
o the measured analog signal of the position sensor (7.1), and
o the deviation of the actuator (1, 2) with respect to the load sharing target from the analog load controlling element (16.1, 16.2, 17.1, 17.2),
the analog controller (9) being configured to:
▪ calculate the deviation between the analog signal of the set position of the actuator (1, 2) and the measured analog signal of the position sensor (7.1, 7.2),
▪ correct said deviation with the deviation of the actuator (1, 2) with respect to the load sharing target, and
▪ provide the actuator (1, 2) with a signal of the deviation from the set position of the actuator (1, 2) corrected by the deviation with the load sharing target.

5. System of an actuator of a flight control surface of an aircraft, according to claim 4, wherein the analog load controlling elements (16.1, 16.2, 17.1, 17.2) comprise a first and a second load controller (16.1, 16.2), the first load controller (16.1) adapted to control the load in the transient period of the load and the second load controller (16.2) adapted to control the load in the stabilised period of the load.

6. System of an actuator of a flight control surface of an aircraft, according to claim 5, wherein the analog load controlling elements (16.1, 16.2, 17.1, 17.2) comprise a low pass filter (17.1) adapted to feed the first load controller (16.1) and a high pass filter (17.2) adapted to feed the second load controller (16.2), the first and second pass filters (17.1, 17.2) adapted to receive the measured analog signals of the load sensors (7.2) of the first and of the second actuator (1, 2).

7. System of an actuator of a flight control surface of an aircraft, according to any preceding claim, wherein the first and the second control unit (3, 4) comprises a shift register (11) configured to communicate with the flight control computers (5, 6) for receiving the set position digital signal of the actuators (1, 2) and to the analog converter (8, 9) for sending the output signal of the shift register (11).

8. System of an actuator of a flight control surface of an aircraft, according claim 7, wherein the first and the second control unit (3, 4) comprises a first shift register (11.1) and a second shift register (11.2), the first shift register (11.1) configured to communicate with a first flight control computer (5.1) and the second shift register configured to communicate with a second flight control computer (5.2).

9. System of an actuator of a flight control surface of an aircraft, according to any preceding claim, wherein the control unit (3, 4) comprises an analog to digital converter (12) configured to receive the measured signal of the analog sensors (7.1, 7.2) and configured to communicate with the flight control computers (5, 6).

10. System of an actuator of a flight control surface of an aircraft, according to claim 9, wherein the control unit (3, 4) comprises a demodulation unit (13) located between the analog sensors (7.1, 7.2) and the analog to digital converter (12).

11. System of an actuator of a flight control surface of an aircraft, according to any preceding claim, wherein the first control unit (3) is additionally configured to receive the set position of the second actuator (2) and the second control unit (4) is configured to receive the set position of the first actuator (1).

12. Aircraft comprising:
- a flight control surface (10),
- a first actuator (1) and a second actuator (2) in connection with the flight control surface (10) for its movement,
- the first actuator (1) comprising a position analog sensor (7.1) and a load analog sensor (7.2), the position analog sensor (7.1) configured to provide an analog signal of the position of the first actuator (1) and the load analog sensor (7.2) configured to provide an analog signal of the load of the first actuator (1),
- the second actuator (2) comprising a position analog sensor (7.1) and a load analog sensor (7.2), the position analog sensor (7.1) configured to provide an analog signal of the position of the second actuator (2) and the load analog sensor (7.2) configured to provide an analog signal of the load of the second actuator (2), and
- a primary flight control computer (5) and a secondary flight control computer (6), the primary flight control computer (5) configured to provide a digital signal of a set position of the first actuator (1) and the secondary flight control computer (6) configured to provide a digital signal of a set position of the second actuator (2),
the aircraft **characterised in that** it comprises a system of an actuator of a flight control surface of an aircraft according to any preceding claim.

13. Control method for an actuator for a flight control surface of an aircraft, the aircraft comprising a first actuator (1) and a second actuator (2) in connection with the flight control surface (10) for its movement, the aircraft further comprising a primary flight control computer (5) and a secondary flight control computer (6), the primary flight control computer (5) configured to provide a set position digital signal of the first actuator (1) and the secondary flight control computer (6) configured to provide a set position digital signal of the second actuator (2), and
- the first actuator (1) comprising a position analog sensor (7.1) configured to provide an analog signal of the position of the first actuator (1) and a load analog sensor (7.2) configured to provide an analog signal of the load of the first actuator (1),
- the second actuator (2) comprising a position analog sensor (7.1) configured to provide an analog signal of the position of the second actuator (2) and a load analog sensor (7.2) configured to provide an analog signal of the load of the second actuator (2),
the control method **characterised in that** it comprises the following steps:
- providing a first control unit (3) connected to the first actuator (1) for its activation and movement,
- the first control unit (3) receiving from the primary flight control computer (5) the set position of the first actuator (1),
- providing a second control unit (4) connected to the second actuator (2) for its activation and movement,
- the second control unit (4) receiving from the secondary flight control computer (6) the set position of the second actuator (2),
- converting the digital signal of the set position of the first actuator (1) into an analog signal by a first digital to analog converter (8) located in the first control unit (3),
- converting the digital signal of the set position of the second actuator (2) into an analog signal by a second digital to analog converter (8) located in the second control unit (4),
- providing to a first analog controlling element (20) located in the first control unit (3):
o the output analog signal of the set position of the first actuator (1) from the first digital to analog converter (8),
o the measured analog signal of the position sensor (7.1) of the first actuator (1), and
o the measured analog signals of the load sensors (7.2) of the first and of the second actuator (1, 2),
- providing to a second analog controlling element (20) located in the second control unit (4):
o the output analog signal of the set position of the second actuator (2) from the second digital to analog converter (8),
o the measured analog signal of the position sensor (7.1) of the second actuator (2), and
o the measured analog signal of the load sensors (7.2) of the first and of the second actuator (1, 2),
- calculating, in the first analog controlling element (20) of the first control unit (3), the deviation between the analog signal of the set position of the first actuator (1) and the measured analog signal of the position sensor (7.1),
- calculating, in the first analog controlling element (20) of the first control unit (3), a load sharing between the first and the second actuators (1, 2) and the deviation of the first actuator (1) with respect to a load sharing target,
- providing, in the first analog controlling element (20) of the first control unit (3), the first actuator (1) with a signal of its deviation from the set position of the first actuator (1) corrected by its deviation with the load sharing target,
- calculating, in the second analog controlling element (20) of the second control unit (4), the deviation between the analog signal of the set position of the second actuator (2) and the measured analog signal of the position sensor (7.1),
- calculating, in the second analog controlling element (20) of the second control unit (4), the load sharing between the first and the second actuators (1, 2) and the deviation of the second actuator (2) with respect to a load sharing target,
- providing, in the second analog controlling element (20) of the second control unit (4), the second actuator (2) with a signal of its deviation from the set position of the second actuator (2) corrected by its deviation with respect to the load sharing target.

## Patentansprüche

1. System eines Aktuators einer Flugsteuerfläche eines Flugzeugs, umfassend einen ersten Aktuator (1) und einen zweiten Aktuator (2) und ein Steuersystem für den Aktuator der Flugsteuerfläche des Flugzeugs, wobei der erste Aktuator (1) und der zweite Aktuator (2) für ihre Bewegung mit der Flugsteuerfläche (10) verbindbar sind, wobei das Flugzeug ferner einen primären Flugsteuercomputer (5) und einen sekundären Flugsteuercomputer (6) umfasst, wobei das Steuersystem konfiguriert ist, von dem primären Flugsteuercomputer (5) ein digitales Signal einer eingestellten Position des ersten Aktuators (1) und von dem sekundären Flugsteuercomputer (6) ein digitales Signal einer eingestellten Position des zweiten Aktuators (2) zu empfangen, und
- der erste Aktuator (1) einen analogen Positionssensor (7.1) umfasst, der konfiguriert ist, ein analoges Signal der Position des ersten Aktuators (1) bereitzustellen, und einen analogen Lastsensor (7.2), der konfiguriert ist, ein analoges Signal der Last des ersten Aktuators (1) bereitzustellen,
- der zweite Aktuator (2) einen analogen Positionssensor (7.1) umfasst, der konfiguriert ist, ein analoges Signal der Position des zweiten Aktuators (2) bereitzustellen, und einen analogen Lastsensor (7.2), der konfiguriert ist, ein analoges Signal der Last des zweiten Aktuators (2) bereitzustellen,
das Steuersystem **dadurch gekennzeichnet, dass** es Folgendes umfasst:
- eine erste Steuereinheit (3), die mit dem ersten Aktuator (1) zu dessen Aktivierung und Bewegung verbunden und konfiguriert ist, die eingestellte Position des ersten Aktuators (1) von dem primären Flugsteuercomputer (5) zu empfangen,
- eine zweite Steuereinheit (4), die mit dem zweiten Aktuator (2) zu seiner Aktivierung und Bewegung verbunden und konfiguriert ist, die eingestellte Position des zweiten Aktuators (2) von dem sekundären Flugsteuercomputer (6) zu empfangen,
- die erste Steuereinheit (3) umfassend:
- einen ersten Digital-Analog-Wandler (8), der konfiguriert ist, das digitale Signal der eingestellten Position des ersten Aktuators (1), das von dem primären Flugsteuercomputer (5) empfangen wird, in ein analoges Signal umzuwandeln,
- ein erstes analoges Steuerelement (20), das ausgelegt ist, Folgendes zu empfangen:
o das analoge Ausgangssignal der eingestellten Position des ersten Aktuators (1) vom ersten Digital-Analog-Wandler (8),
o das gemessene analoge Signal des Positionssensors (7.1) des ersten Aktuators (1) und
o die gemessenen analogen Signale der Lastsensoren (7.2) des ersten und des zweiten Aktuators (1,2),
wobei das erste analoge Steuerelement (20) konfiguriert ist, um:
▪ die Abweichung zwischen dem analogen Signal der eingestellten Position des ersten Aktuators (1) und dem gemessenen analogen Signal des Positionssensors (7.1) zu berechnen,
▪ eine Lastaufteilung zwischen dem ersten und dem zweiten Aktuator (1, 2) und der Abweichung des ersten Aktuators (1) in Bezug auf ein Lastaufteilungsziel zu berechnen, und
▪ dem ersten Aktuator (1) ein Signal seiner Abweichung von der eingestellten Position des ersten Aktuators (1), korrigiert um seine Abweichung in Bezug auf das Lastverteilungsziel, bereitzustellen,
- die zweite Steuereinheit (4) umfassend:
- einen zweiten Digital-Analog-Wandler (8), der konfiguriert ist, das digitale Signal der eingestellten Position des zweiten Aktuators (2), das von dem sekundären Steuercomputer (6) empfangen wird, in ein analoges Signal umzuwandeln,
- ein zweites analoges Steuerelement (20), das ausgelegt ist, Folgendes zu empfangen:
o das analoge Ausgangssignal der eingestellten Position des zweiten Aktuators (2) von dem zweiten Digital-Analog-Wandler (8),
o das gemessene analoge Signal des Positionssensors (7.1) des zweiten Aktuators (2) und
o das gemessene analoge Signal der Lastsensoren (7.2) des ersten und des zweiten Aktuators (1,2),
- wobei das zweite analoge Steuerelement (20) konfiguriert ist, um:
▪ die Abweichung zwischen dem analogen Signal der eingestellten Position des zweiten Aktuators (2) und dem gemessenen analogen Signal des Positionssensors (7.1) zu berechnen,
▪ die Lastaufteilung zwischen dem ersten und dem zweiten Aktuator (1, 2) und die Abweichung des zweiten Aktuators (2) in Bezug auf das Lastaufteilungsziel zu berechnen, und
▪ dem zweiten Aktuator (2) ein Signal seiner Abweichung von der eingestellten Position des zweiten Aktuators (2) zu liefern, das durch seine Abweichung in Bezug auf das Lastverteilungsziel korrigiert wird.

2. System eines Aktuators einer Flugsteuerfläche eines Flugzeugs nach Anspruch 1, wobei die analogen Steuerelemente (20) ein erstes und ein zweites Laststeuerelement (16.1, 17.1, 16.2, 17.2) umfassen, wobei das erste Laststeuerelement (16.1, 17.2) angepasst ist, die Lastaufteilung zwischen dem ersten und dem zweiten Aktuator (1, 2) und die Abweichung des Aktuators (1, 2) in Bezug auf das Lastaufteilungsziel in einer Übergangsperiode der Last zu berechnen, und das zweite Laststeuerelement (16.2, 17.2) angepasst ist, die Lastaufteilung zwischen dem ersten und dem zweiten Aktuator (1, 2) und die Abweichung des Aktuators (1, 2) in Bezug auf das Lastaufteilungsziel in einer stabilisierten Periode der Last zu berechnen.

3. System eines Aktuators einer Flugsteuerfläche eines Flugzeugs nach einem der vorhergehenden Ansprüche, wobei die analogen Steuerelemente (20) konfiguriert sind, die Lastaufteilung zwischen dem ersten und dem zweiten Aktuator (1, 2) durch Subtrahieren des gemessenen analogen Signals des Lastsensors (7.2) des anderen Aktuators (2) von dem gemessenen analogen Signal des Lastsensors (7.2) seines Aktuators (1) zu berechnen.

4. System eines Aktuators einer Flugsteuerfläche eines Flugzeugs nach einem der vorhergehenden Ansprüche, wobei das analoge Steuerelement (20) eine analoge Steuerung (9) und ein analoges Laststeuerelement (16.1, 16.2, 17.1, 17.2) umfasst, das analoge Laststeuerelement (16.1, 16.2, 17.1, 17.2) ist:
- angepasst, um die gemessenen analogen Signale der Lastsensoren (7.2) des ersten und des zweiten Aktuators (1, 2) zu empfangen,
- konfiguriert, um die Lastaufteilung zwischen dem ersten und dem zweiten Aktuator (1, 2) und die Abweichung des Aktuators (1, 2) in Bezug auf das Lastaufteilungsziel zu berechnen, und
- konfiguriert, um die Abweichung des Aktuators (1, 2) in Bezug auf das Lastverteilungsziel an die analoge Steuerung (9) zu senden, und
die analoge Steuerung (9) ist ausgelegt, Folgendes zu empfangen:
o das analoge Ausgangssignal der eingestellten Position des Aktuators (1, 2) vom Digital-Analog-Wandler (8),
o das gemessene analoge Signal des Positionssensors (7.1) und
o die Abweichung des Aktuators (1,2) in Bezug auf das Lastverteilungsziel vom analogen Laststeuerelement (16.1, 16.2, 17.1, 17.2),
wobei die analoge Steuerung (9) konfiguriert ist, um:
▪ die Abweichung zwischen dem analogen Signal der eingestellten Position des Aktuators (1, 2) und dem gemessenen analogen Signal des Positionssensors (7.1, 7.2) zu berechnen,
▪ diese Abweichung mit der Abweichung des Aktuators (1, 2) in Bezug auf das Lastverteilungszielzu korrigieren, und
▪ dem Aktuator (1, 2) ein Signal der Abweichung von der eingestellten Position des Aktuators (1, 2), korrigiert um die Abweichung mit dem Lastverteilungsziel, zur Verfügung zu stellen.

5. System eines Aktuators einer Flugsteuerfläche eines Flugzeugs nach Anspruch 4, wobei die analogen Laststeuerelemente (16.1, 16.2, 17.1, 17.2) eine erste und eine zweite Laststeuerung (16.1, 16.2) umfassen, wobei die erste Laststeuerung (16.1) angepasst ist, die Last in der Übergangsperiode der Last zu steuern, und die zweite Laststeuerung (16.2) angepasst ist, die Last in der stabilisierten Periode der Last zu steuern.

6. System eines Aktuators einer Flugsteuerfläche eines Flugzeugs nach Anspruch 5, wobei die analogen Laststeuerelemente (16.1, 16.2, 17.1, 17.2) einen Tiefpassfilter (17.1) umfassen, der dazu ausgelegt ist, die erste Laststeuerung (16.1) zu versorgen, und einen Hochpassfilter (17.2) umfassen, der dazu ausgelegt ist, die zweite Laststeuerung (16.2) zu versorgen, wobei der erste und der zweite Passfilter (17.1, 17.2) dazu ausgelegt sind, die gemessenen analogen Signale der Lastsensoren (7.2) des ersten und des zweiten Aktuators (1, 2) zu empfangen.

7. System eines Aktuators einer Flugsteuerfläche eines Flugzeugs nach einem der vorhergehenden Ansprüche, wobei die erste und die zweite Steuereinheit (3, 4) ein Schieberegister (11) umfassen, das konfiguriert ist, mit den Flugsteuercomputern (5, 6) zum Empfangen des digitalen Signals der eingestellten Position der Aktuatoren (1, 2) und mit dem analogen Wandler (8, 9) zum Senden des Ausgangssignals des Schieberegisters (11) zu kommunizieren.

8. System eines Aktuators einer Flugsteuerfläche eines Flugzeugs nach Anspruch 7, wobei die erste und die zweite Steuereinheit (3, 4) ein erstes Schieberegister (11.1) und ein zweites Schieberegister (11.2) umfassen, wobei das erste Schieberegister (11.1) konfiguriert ist, mit einem ersten Flugsteuercomputer (5.1) zu kommunizieren, und das zweite Schieberegister konfiguriert ist, mit einem zweiten Flugsteuercomputer (5.2) zu kommunizieren.

9. System eines Aktuators einer Flugsteuerfläche eines Flugzeugs nach einem der vorhergehenden Ansprüche, wobei die Steuereinheit (3, 4) einen Analog-Digital-Wandler (12) umfasst, der konfiguriert ist, das gemessene Signal der analogen Sensoren (7.1, 7.2) zu empfangen, und konfiguriert ist, mit den Flugsteuercomputern (5, 6) zu kommunizieren.

10. System eines Aktuators einer Flugsteuerfläche eines Flugzeugs nach Anspruch 9, wobei die Steuereinheit (3, 4) eine Demodulationseinheit (13) umfasst, die zwischen den analogen Sensoren (7.1, 7.2) und dem Analog-Digital-Wandler (12) angeordnet ist.

11. System eines Aktuators einer Flugsteuerfläche eines Flugzeugs nach einem der vorhergehenden Ansprüche, wobei die erste Steuereinheit (3) zusätzlich konfiguriert ist, die eingestellte Position des zweiten Aktuators (2) zu empfangen, und die zweite Steuereinheit (4) konfiguriert ist, die eingestellte Position des ersten Aktuators (1) zu empfangen.

12. Flugzeug, umfassend:
- eine Flugsteuerfläche (10),
- einen ersten Aktuator (1) und einen zweiten Aktuator (2) in Verbindung mit der Flugsteuerfläche (10) für seine Bewegung,
- den ersten Aktuator (1), der einen analogen Positionssensor (7.1) und einen analogen Lastsensor (7.2) umfasst, wobei der analoge Positionssensor (7.1) konfiguriert ist, ein analoges Signal der Position des ersten Aktuators (1) bereitzustellen, und der analoge Lastsensor (7.2) konfiguriert ist, ein analoges Signal der Last des ersten Aktuators (1) bereitzustellen,
- den zweiten Aktuator (2), der einen analogen Positionssensor (7.1) und einen analogen Lastsensor (7.2) umfasst, wobei der analoge Positionssensor (7.1) konfiguriert ist, ein analoges Signal der Position des zweiten Aktuators (2) bereitzustellen, und der analoge Lastsensor (7.2) konfiguriert ist, ein analoges Signal der Last des zweiten Aktuators (2) bereitzustellen, und
- einen primären Flugsteuercomputer (5) und einen sekundären Flugsteuercomputer (6), wobei der primäre Flugsteuercomputer (5) konfiguriert ist, ein digitales Signal einer eingestellten Position des ersten Aktuators (1) bereitzustellen, und der sekundäre Flugsteuercomputer (6) konfiguriert ist, ein digitales Signal einer eingestellten Position des zweiten Aktuators (2) bereitzustellen,
- das Luftfahrzeug, **dadurch gekennzeichnet, dass** es ein System eines Aktuators einer Flugsteuerfläche eines Luftfahrzeugs nach einem der vorhergehenden Ansprüche umfasst.

13. Steuerverfahren für einen Aktuator für eine Flugsteuerfläche eines Flugzeugs, wobei das Flugzeug einen ersten Aktuator (1) und einen zweiten Aktuator (2) in Verbindung mit der Flugsteuerfläche (10) für seine Bewegung umfasst, wobei das Flugzeug ferner einen primären Flugsteuercomputer (5) und einen sekundären Flugsteuercomputer (6) umfasst, wobei der primäre Flugsteuercomputer (5) konfiguriert ist, ein digitales Signal der eingestellten Position des ersten Aktuators (1) bereitzustellen, und der sekundäre Flugsteuercomputer (6) konfiguriert ist, ein digitales Signal der eingestellten Position des zweiten Aktuators (2) bereitzustellen, und
- der erste Aktuator (1) einen analogen Positionssensor (7.1) umfasst, der konfiguriert ist, ein analoges Signal der Position des ersten Aktuators (1) bereitzustellen, und einen analogen Lastsensor (7.2), der konfiguriert ist, ein analoges Signal der Last des ersten Aktuators (1) bereitzustellen,
- der zweite Aktuator (2) einen analogen Positionssensor (7.1) umfasst, der konfiguriert ist, ein analoges Signal der Position des zweiten Aktuators (2) bereitzustellen, und einen analogen Lastsensor (7.2) umfasst, der konfiguriert ist, ein analoges Signal der Last des zweiten Aktuators (2) bereitzustellen, wobei das Steuerverfahren **dadurch gekennzeichnet ist, dass** es die folgenden Schritte umfasst:
- Bereitstellen einer ersten Steuereinheit (3), die mit dem ersten Aktuator (1) zu dessen Aktivierung und Bewegung verbunden ist,
- Empfangen durch die erste Steuereinheit (3) vom primären Flugsteuercomputer (5) der eingestellten Position des ersten Aktuators (1),
- Bereitstellen einer zweiten Steuereinheit (4), die mit dem zweiten Aktuator (2) zu dessen Aktivierung und Bewegung verbunden ist,
- Empfangen durch die zweite Steuereinheit (4) vom sekundären Flugsteuercomputer (6) der eingestellten Position des zweiten Aktuators (2),
- Umwandeln des digitalen Signals der eingestellten Position des ersten Aktuators (1) in ein analoges Signal durch einen ersten Digital-Analog-Wandler (8), der sich in der ersten Steuereinheit (3) befindet,
- Umwandeln des digitalen Signals der eingestellten Position des zweiten Aktuators (2) in ein analoges Signal durch einen zweiten Digital-Analog-Wandler (8), der sich in der zweiten Steuereinheit (4) befindet,
- Bereitstellen von Folgendem an ein erstes analoges Steuerelement (20), das sich in der ersten Steuereinheit (3) befindet:
o das analoge Ausgangssignal der eingestellten Position des ersten Aktuators (1) vom ersten Digital-Analog-Wandler (8),
o das gemessene analoge Signal des Positionssensors (7.1) des ersten Aktuators (1) und
o die gemessenen analogen Signale der Lastsensoren (7.2) des ersten und des zweiten Aktuators (1,2),
- Bereitstellen von Folgendem an ein zweites analoges Steuerelement (20), das sich in der zweiten Steuereinheit (4) befindet:
o das analoge Ausgangssignal der eingestellten Position des zweiten Aktuators (2) von dem zweiten Digital-Analog-Wandler (8),
o das gemessene analoge Signal des Positionssensors (7.1) des zweiten Aktuators (2) und
o das gemessene analoge Signal der Lastsensoren (7.2) des ersten und des zweiten Aktuators (1,2),
- Berechnen, in dem ersten analogen Steuerelement (20) der ersten Steuereinheit (3), der Abweichung zwischen dem analogen Signal der eingestellten Position des ersten Aktuators (1) und dem gemessenen analogen Signal des Positionssensors (7.1),
- Berechnen, in dem ersten analogen Steuerelement (20) der ersten Steuereinheit (3), einer Lastaufteilung zwischen dem ersten und dem zweiten Aktuator (1, 2) und der Abweichung des ersten Aktuators (1) in Bezug auf ein Lastaufteilungsziel,
- Bereitstellen, in dem ersten analogen Steuerelement (20) der ersten Steuereinheit (3), eines Signals für die Abweichung von der eingestellten Position des ersten Aktuators (1) an den ersten Aktuator (1) korrigiert um seine Abweichung von dem Lastverteilungsziel,
- Berechnen, in dem zweiten analogen Steuerelement (20) der zweiten Steuereinheit (4), der Abweichung zwischen dem analogen Signal der eingestellten Position des zweiten Aktuators (2) und dem gemessenen analogen Signal des Positionssensors (7.1),
- Berechnen, in dem zweiten analogen Steuerelement (20) der zweiten Steuereinheit (4), der Lastaufteilung zwischen dem ersten und dem zweiten Aktuator (1, 2) und der Abweichung des zweiten Aktuators (2) in Bezug auf ein Lastaufteilungsziel,
- Bereitstellen, in dem zweiten analogen Steuerelement (20) der zweiten Steuereinheit (4), eines Signals für die Abweichung von der eingestellten Position des zweiten Aktuators (2) an den zweiten Aktuator (2), korrigiert um seine Abweichung von dem Lastverteilungsziel.

## Revendications

1. Système d'un actionneur d'une surface de commande de vol d'un aéronef, comprenant un premier actionneur (1) et un second actionneur (2), et un système de commande pour l'actionneur de la surface de commande de vol de l'aéronef, le premier actionneur (1) et le second actionneur (2) pouvant être connectés à la surface de commande de vol (10) pour son mouvement, l'aéronef comprenant en outre un calculateur de commande de vol primaire (5) et un calculateur de commande de vol secondaire (6), le système de commande étant configuré pour recevoir du calculateur de commande de vol primaire (5) un signal numérique d'une position définie du premier actionneur (1) et du calculateur de commande de vol secondaire (6) un signal numérique d'une position définie du second actionneur (2), et
- le premier actionneur (1) comprenant un capteur analogique de position (7.1) configuré pour fournir un signal analogique de la position du premier actionneur (1) et un capteur analogique de charge (7.2) configuré pour fournir un signal analogique de la charge du premier actionneur (1),
- le second actionneur (2) comprenant un capteur analogique de position (7.1) configuré pour fournir un signal analogique de la position du second actionneur (2) et un capteur analogique de charge (7.2) configuré pour fournir un signal analogique de la charge du second actionneur (2),
le système de commande **caractérisé en ce qu'**il comprend :
- une première unité de commande (3) connectée au premier actionneur (1) pour son activation et son mouvement et configurée pour recevoir la position définie du premier actionneur (1) à partir du calculateur de commande de vol primaire (5),
- une deuxième unité de commande (4) connectée au deuxième actionneur (2) pour son activation et son mouvement et configurée pour recevoir la position définie du deuxième actionneur (2) à partir du calculateur de commande de vol secondaire (6),
- la première unité de commande (3) comprenant :
- un premier convertisseur numérique/analogique (8) configuré pour convertir le signal numérique de la position réglée du premier actionneur (1) reçu du calculateur de commande de vol primaire (5) en un signal analogique,
- un premier élément de commande analogique (20) adapté pour recevoir :
o le signal analogique de sortie de la position définie du premier actionneur (1) du premier convertisseur numérique/analogique (8),
o le signal analogique mesuré du capteur de position (7.1) du premier actionneur (1), et
o les signaux analogiques mesurés des capteurs de charge (7.2) du premier et du second actionneur (1, 2),
le premier élément de commande analogique (20) étant configuré pour :
▪ calculer l'écart entre le signal analogique de la position définie du premier actionneur (1) et le signal analogique mesuré du capteur de position (7.1),
▪ calculer un partage de charge entre le premier et le second actionneur (1, 2) et la déviation du premier actionneur (1) par rapport à une cible de partage de charge, et
▪ fournir au premier actionneur (1) un signal de son écart par rapport à la position définie du premier actionneur (1), corrigé de son écart par rapport à la cible de partage de charge,
- la deuxième unité de commande (4) comprenant :
- un second convertisseur numérique/analogique (8) configuré pour convertir le signal numérique de la position définie du second actionneur (2) reçu du calculateur de commande secondaire (6) en un signal analogique,
- un second élément de commande analogique (20) adapté pour recevoir :
o le signal analogique de sortie de la position définie du deuxième actionneur (2) du deuxième convertisseur numérique/analogique (8),
o le signal analogique mesuré du capteur de position (7.1) du second actionneur (2), et
o le signal analogique mesuré des capteurs de charge (7.2) du premier et du second actionneur (1, 2),
- le second élément de commande analogique (20) étant configuré pour :
▪ calculer l'écart entre le signal analogique de la position définie du second actionneur (2) et le signal analogique mesuré du capteur de position (7.1),
▪ calculer le partage de charge entre le premier et le second actionneur (1, 2) et l'écart du second actionneur (2) par rapport à la cible de partage de charge, et
▪ pour fournir au second actionneur (2) un signal de son écart par rapport à la position définie du second actionneur (2), corrigé par son écart par rapport à la cible de partage de charge.

2. Système d'un actionneur d'une surface de commande de vol d'un aéronef, selon la revendication 1, dans lequel les éléments de commande analogiques (20) comprennent un premier et un second éléments de commande de charge (16.1, 17.1, 16.2, 17.2), le premier élément de commande de charge (16.1, 17.2) étant adapté pour calculer le partage de charge entre le premier et le second actionneur (1, 2) et la déviation de l'actionneur (1, 2) par rapport à la cible de partage de charge dans une période transitoire de la charge, et le second élément de commande de charge (16.2, 17.2) étant adapté pour calculer le partage de charge entre le premier et le second actionneur (1, 2) et la déviation de l'actionneur (1, 2) par rapport à la cible de partage de charge dans une période stabilisée de la charge.

3. Système d'un actionneur d'une surface de commande de vol d'un aéronef, selon l'une quelconque des revendications précédentes, dans lequel les éléments de commande analogiques (20) sont configurés pour calculer le partage de charge entre le premier et le second actionneur (1, 2) en soustrayant le signal analogique mesuré du capteur de charge (7.2) de l'autre actionneur (2) du signal analogique mesuré du capteur de charge (7.2) de son actionneur (1).

4. Système d'un actionneur d'une surface de commande de vol d'un aéronef, selon l'une quelconque des revendications précédentes, dans lequel l'élément de commande analogique (20) comprend un contrôleur analogique (9) et un élément de commande de charge analogique (16.1, 16.2, 17.1, 17.2), l'élément de commande de charge analogique (16.1, 16.2, 17.1, 17.2) étant :
- adapté pour recevoir les signaux analogiques mesurés des capteurs de charge (7.2) du premier et du second actionneur (1, 2),
- configuré pour calculer le partage de charge entre le premier et le second actionneur (1, 2) et la déviation de l'actionneur (1, 2) par rapport à la cible de partage de charge, et
- configuré pour envoyer la déviation de l'actionneur (1, 2) par rapport à la cible de partage de charge au contrôleur analogique (9), et
le contrôleur analogique (9) adapté pour recevoir :
o le signal analogique de sortie de la position définie de l'actionneur (1, 2) du convertisseur numérique/analogique (8),
o le signal analogique mesuré du capteur de position (7.1), et
o la déviation de l'actionneur (1, 2) par rapport à la cible de partage de charge par rapport à l'élément de commande de charge analogique (16.1, 16.2, 17.1, 17.2),
le contrôleur analogique (9) étant configuré pour :
▪ calculer l'écart entre le signal analogique de la position réglée de l'actionneur (1, 2) et le signal analogique mesuré du capteur de position (7.1, 7.2),
▪ corriger ledit écart avec l'écart de l'actionneur (1, 2) par rapport à la cible de partage de charge, et
▪ fournir à l'actionneur (1, 2) un signal de l'écart par rapport à la position définie de l'actionneur (1, 2) corrigé par l'écart avec la cible de partage de charge.

5. Système d'un actionneur d'une surface de commande de vol d'un aéronef selon la revendication 4, dans lequel les éléments de commande de charge analogiques (16.1, 16.2, 17.1, 17.2) comprennent un premier et un second contrôleur de charge (16.1, 16.2), le premier contrôleur de charge (16.1) étant adapté pour commander la charge pendant la période transitoire de la charge et le second contrôleur de charge (16.2) étant adapté pour commander la charge pendant la période stabilisée de la charge.

6. Système d'un actionneur d'une surface de commande de vol d'un aéronef, selon la revendication 5, dans lequel les éléments de commande de charge analogiques (16.1, 16.2, 17.1, 17.2) comprennent un filtre passe-bas (17.1) adapté pour alimenter le premier contrôleur de charge (16.1) et un filtre passe-haut (17.2) adapté pour alimenter le second contrôleur de charge (16.2), les premier et second filtres passe-bas (17.1, 17.2) étant adaptés pour recevoir les signaux analogiques mesurés des capteurs de charge (7.2) du premier et du second actionneur (1, 2).

7. Système d'un actionneur d'une surface de commande de vol d'un aéronef, selon l'une quelconque des revendications précédentes, dans lequel la première et la seconde unité de commande (3, 4) comprennent un registre à décalage (11) configuré pour communiquer avec les ordinateurs de commande de vol (5, 6) pour recevoir le signal numérique de position définie des actionneurs (1, 2) et au convertisseur analogique (8, 9) pour envoyer le signal de sortie du registre à décalage (11).

8. Système d'un actionneur d'une surface de commande de vol d'un aéronef, selon la revendication 7, dans lequel la première et la seconde unité de commande (3, 4) comprennent un premier registre à décalage (11.1) et un second registre à décalage (11.2), le premier registre à décalage (11.1) étant configuré pour communiquer avec un premier ordinateur de commande de vol (5.1) et le second registre à décalage étant configuré pour communiquer avec un second ordinateur de commande de vol (5.2).

9. Système d'un actionneur d'une surface de commande de vol d'un aéronef, selon l'une quelconque des revendications précédentes, dans lequel l'unité de commande (3, 4) comprend un convertisseur analogique/numérique (12) configuré pour recevoir le signal mesuré des capteurs analogiques (7.1, 7.2) et configuré pour communiquer avec les ordinateurs de commande de vol (5, 6).

10. Système d'un actionneur d'une surface de commande de vol d'un aéronef selon la revendication 9, dans lequel l'unité de commande (3, 4) comprend une unité de démodulation (13) située entre les capteurs analogiques (7.1, 7.2) et le convertisseur analogique/numérique (12).

11. Système d'un actionneur d'une surface de commande de vol d'un aéronef, selon l'une quelconque des revendications précédentes, dans lequel la première unité de commande (3) est en outre configurée pour recevoir la position réglée du second actionneur (2) et la seconde unité de commande (4) est configurée pour recevoir la position réglée du premier actionneur (1).

12. Aéronef comprenant :
- une gouverne de vol (10),
- un premier actionneur (1) et un second actionneur (2) en liaison avec la gouverne (10) pour son déplacement,
- le premier actionneur (1) comprenant un capteur analogique de position (7.1) et un capteur analogique de charge (7.2), le capteur analogique de position (7.1) étant configuré pour fournir un signal analogique de la position du premier actionneur (1) et le capteur analogique de charge (7.2) étant configuré pour fournir un signal analogique de la charge du premier actionneur (1),
- le second actionneur (2) comprenant un capteur analogique de position (7.1) et un capteur analogique de charge (7.2), le capteur analogique de position (7.1) étant configuré pour fournir un signal analogique de la position du second actionneur (2) et le capteur analogique de charge (7.2) étant configuré pour fournir un signal analogique de la charge du second actionneur (2), et
- un calculateur de commande de vol primaire (5) et un calculateur de commande de vol secondaire (6), le calculateur de commande de vol primaire (5) étant configuré pour fournir un signal numérique d'une position définie du premier actionneur (1) et le calculateur de commande de vol secondaire (6) étant configuré pour fournir un signal numérique d'une position définie du second actionneur (2),
- l'aéronef **caractérisé en ce qu'**il comprend un système d'actionneur d'une surface de commande de vol d'un aéronef selon l'une quelconque des revendications précédentes.

13. Procédé de commande d'un actionneur pour une surface de commande de vol d'un aéronef, l'aéronef comprenant un premier actionneur (1) et un second actionneur (2) en relation avec la surface de commande de vol (10) pour son mouvement, l'aéronef comprenant en outre un calculateur de commande de vol primaire (5) et un calculateur de commande de vol secondaire (6), le calculateur de commande de vol primaire (5) étant configuré pour fournir un signal numérique de position de consigne du premier actionneur (1) et le calculateur de commande de vol secondaire (6) étant configuré pour fournir un signal numérique de position de consigne du second actionneur (2), et
- le premier actionneur (1) comprenant un capteur analogique de position (7.1) configuré pour fournir un signal analogique de la position du premier actionneur (1) et un capteur analogique de charge (7.2) configuré pour fournir un signal analogique de la charge du premier actionneur (1),
- le second actionneur (2) comprenant un capteur analogique de position (7.1) configuré pour fournir un signal analogique de la position du second actionneur (2) et un capteur analogique de charge (7.2) configuré pour fournir un signal analogique de la charge du second actionneur (2), le procédé de commande étant **caractérisé en ce qu'**il comprend les étapes suivantes :
- assurer une première unité de commande (3) reliée au premier actionneur (1) pour son activation et son déplacement,
- la première unité de commande (3) recevant du calculateur de commande de vol primaire (5) la position définie du premier actionneur (1),
- assurer une deuxième unité de commande (4) reliée au deuxième actionneur (2) pour son activation et son déplacement,
- la deuxième unité de commande (4) recevant du calculateur de commande de vol secondaire (6) la position réglée du deuxième actionneur (2),
- convertir le signal numérique de la position définie du premier actionneur (1) en un signal analogique par un premier convertisseur numérique/analogique (8) situé dans la première unité de commande (3),
- convertir le signal numérique de la position définie du deuxième actionneur (2) en un signal analogique par un deuxième convertisseur numérique/analogique (8) situé dans la deuxième unité de commande (4),
- assurer à un premier élément de commande analogique (20) situé dans la première unité de commande (3) :
o le signal analogique de sortie de la position définie du premier actionneur (1) du premier convertisseur numérique/analogique (8),
o le signal analogique mesuré du capteur de position (7.1) du premier actionneur (1), et
o les signaux analogiques mesurés des capteurs de charge (7.2) du premier et du second actionneur (1, 2),
- assurer à un deuxième élément de commande analogique (20) situé dans la deuxième unité de commande (4) :
o le signal analogique de sortie de la position définie du deuxième actionneur (2) du deuxième convertisseur numérique/analogique (8),
o le signal analogique mesuré du capteur de position (7.1) du second actionneur (2), et
o le signal analogique mesuré des capteurs de charge (7.2) du premier et du second actionneur (1, 2),
- calculer, dans le premier élément de commande analogique (20) de la première unité de commande (3), l'écart entre le signal analogique de la position définie du premier actionneur (1) et le signal analogique mesuré du capteur de position (7.1),
- calculer, dans le premier élément de commande analogique (20) de la première unité de commande (3), un partage de charge entre le premier et le second actionneur (1, 2) et la déviation du premier actionneur (1) par rapport à une cible de partage de charge,
- fournir, dans le premier élément de commande analogique (20) de la première unité de commande (3), au premier actionneur (1) un signal de son écart par rapport à la position définie du premier actionneur (1) corrigé par son écart avec la cible de partage de charge,
- calculer, dans le second élément de commande analogique (20) de la seconde unité de commande (4), l'écart entre le signal analogique de la position définie du second actionneur (2) et le signal analogique mesuré du capteur de position (7.1),
- calculer, dans le second élément de commande analogique (20) de la seconde unité de commande (4), le partage de charge entre le premier et le second actionneur (1, 2) et la déviation du second actionneur (2) par rapport à une cible de partage de charge,
- fournir, dans le second élément de commande analogique (20) de la seconde unité de commande (4), au second actionneur (2) un signal de son écart par rapport à la position définie du second actionneur (2) corrigé par son écart par rapport à la cible de partage de charge.
